# EUROPEAN PATENT SPECIFICATION

(11) **EP 2 775 692 B1**
(45) Date of publication and mention of the grant of the patent: **08.02.2017**
(21) Application number: 13158435.1
(22) Date of filing: 08.03.2013
(51) Int. Cl.: H04M 1/02, G06F 1/16, H04M 1/725

(54) **Magnetic connector**
Magnetverbinder
Connecteur magnétique

(43) Date of publication of application: 10.09.2014
(73) Proprietor: BlackBerry Limited, Waterloo, ON N2K 0A7 (CA)
(72) Inventor: Griffin, Jason Tyler, Waterloo, Ontario N2L 3W8 (CA)
(74) Representative: Roberts, Gwilym Vaughan

(56) References cited:
- EP-A1- 2 487 877
- WO-A2-2012/106215
- US-A1- 2010 123 663
- US-A1- 2010 238 620

## Description

### Field of Technology

The present disclosure relates to connectors and more particularly to connectors used to pivotally couple two housings to one another.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), gaming consoles, tablets, netbooks and laptop computers with wireless 802.11 or Bluetooth® capabilities.

Portable electronic devices such as PDAs or smart telephones are generally intended for handheld use and ease of portability. Smaller devices are generally desirable for portability. In many cases such devices include a pair of housings that couple to one another and that move relative to one another between, for example, a closed (or stowed) configuration and an opened (or deployed) configuration. By one approach, for example, a first such housing may include a display while a second such housing may include a keyboard.

Many such devices employ one or more mechanical connectors to connect one such housing to another. So configured, the two housings can pivot with respect to one another about the connector(s). While useful for many purposes, physical, mechanical connectors are not necessarily fully satisfactory for all application settings and users. Not only can a mechanical coupling give rise to design limitations, but also it can restrict the physical manipulability of the resultant device to only a very specific configuration.

US 2010/0238620 discloses a computer system including a base unit, a display unit detachable from the base unit, and a set of magnetic elements in the display unit and/or the base unit to attach the display unit to the base unit and to hold the display unit in the open position.

EP 2 487 877 discloses a portable processing device that includes a base portion and a main portion. The base portion includes a magnet and guides. The main portion includes a magnetic area. The base portion and the main portion are separable and configured to be held together by a magnetic force between the magnetic area and the magnet. The main portion is configured to be slideably movable with respect to the base portion in a sliding direction defined by the guides. The base portion may further include a cavity adjacent to the tope end of the base portion, with a second magnet disposed proximite the cavity. At the end of a sliding motion, the bottom of the main portion is pulled into the cavity by magnetic attraction between the second magnet and the magnetic area. In some embodiments the main portion may be capable of a flip with respect to the base portion.

US 2010/0123663 discloses a wireless keyboard including a base, a wireless keyboard and a plurality of magnets. The base has a groove to accommodate an edge of an electronic device. The wireless keyboard is disposed on the base and has a wireless communication module to exchange information data with the electronic device. The plurality of magnets are disposed within the groove to magnetically attract the edge of the electronic device.

### Brief Description of the Drawings

FIG. 1 is a top plan detail view in accordance with the disclosure.
FIG. 2 is a perspective view in accordance with the disclosure.
FIG. 3 is a side elevational view in accordance with the disclosure.
FIG. 4 is a side elevational detail view in accordance with the disclosure.
FIG. 5 is a side elevational view in accordance with the disclosure.
FIG. 6 is a side elevational view in accordance with the disclosure.
FIG. 7 is a side elevational detail view in accordance with the disclosure.
FIG. 8 is a side elevational view in accordance with the disclosure.
FIG. 9 is a side elevational view in accordance with the disclosure.
FIG. 10 is a side elevational detail view in accordance with the disclosure.
FIG. 11 is a side elevational view in accordance with the disclosure.
FIG. 12 is a side elevational detail view in accordance with the disclosure.
FIG. 13 is a rear perspective view in accordance with the disclosure.

### Detailed Description

According to the present invention, there is provided an apparatus as per claim 1.

The following describes an apparatus having a first housing and a second housing. By one approach at least the second housing has at least one exterior edge configured as a pivot surface. The first housing includes at least a first magnet and the second housing includes at least a second magnet that is disposed proximal to the aforementioned pivot surface. So configured, the first and second magnet interact with one another and thereby serve as a magnetic connector such that the first housing pivots with respect to the second housing. By one approach, the first and second housings do not pivotally connect to one another via a mechanical connector. Accordingly, the magnetic connector described herein is devoid of any physical linkage component. As a result, the first and second housings are mechanically disjoint.

The present teachings are highly flexible in practice. For example, the aforementioned housings can have a variety of form factors and can accommodate all manner of circuitry or the like. By one approach, for example, the first housing includes a keyboard (such as, if desired, an alphanumeric QWERTY-style keyboard) and the second housing has a display. Many other variations are possible.

As another example of the flexibility of these teachings, the first housing has at least one exterior edge that is also configured as a pivot surface. So configured, for example, the pivot surface of the first housing can engage the pivot surface of the second housing when one housing pivots with respect to the other.

The specific form and configuration of the aforementioned pivot surface can vary with the application setting. By one approach the pivot surface can comprise a half bullnose edge formed along the corresponding exterior edge of the respective housing. By another approach the pivot surface comprises an exterior edge having a first edge portion that comprises a right-angle edge and a second edge portion that is disposed at about a forty-five degree angle to the right-angle edge.

These teachings also accommodate providing the opposing exterior edge of that same housing with a pivot surface as well. Suitably configured in this manner it then becomes possible for the first housing to selectively pivot with respect to either of two opposing edges of the second housing. Such flexibility, of course, is generally unavailable when employing mechanical connectors.

The aforementioned magnets can be disposed within and/or on the corresponding housing as desired. By one approach the individual magnets are disposed within the respective housing such that the resultant strength of the magnetic field is essentially the same around a given corresponding edge of the housing. By another approach one or more of the individual magnets can be non-centrally located in order to provide portions of the edge that have magnetic fields of greater and lesser strength. The latter approach can serve, for example, to make it easier in some configurations to break the magnetic connection and temporarily move one housing apart from the other.

So configured, and by way of an illustrative example, a laptop-style keyboard and display can be folded into a stowed configuration with the display facing the keyboard. The display portion can then be pivoted away from the keyboard to a desired position. By one approach, the display can continue to pivot rearwardly until the display portion is back-to-back with the keyboard. By another approach, the display and keyboard can be separated from one another to facilitate repositioning these components in some other desired way (such as, for example, with the two components again assuming a folded-laptop configuration only with the display facing to the exterior and with the keyboard being disposed under the display and facing into the backside of the display portion).

Magnetic connectors, employed in the absence of any mechanical connectors, provide an opportunity for convenient yet reliable manipulation by a user. Such an approach can be cost effective and can also yield a longer-lived end product whose useful lifetime is not ultimately determined by when a mechanical connector fails. The present teachings will also support component configurations that are not readily attainable using mechanical connectors.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

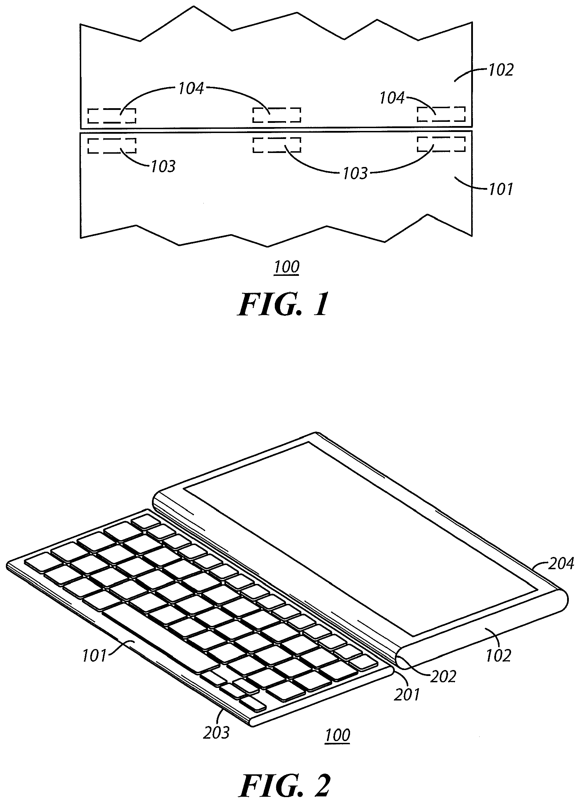

FIG. 1 presents a dual-housing apparatus 100 having a first housing 101 and a second housing 102. Both the first and second housings 101 and 102 have a plurality of magnets 103 and 104, respectively, disposed therein. Any of a variety of magnetic materials can be so employed as desired including, if desired, one or more electromagnets. These teachings will also readily accommodate using a variety of different magnets ("different" in terms of their size, shape, and/or material composition) if so desired.

In this example it is presumed that the magnets 103 and 104 all have a cylindrical shape and that their respective magnetic polarity is laterally oriented rather than longitudinally oriented. These magnets 103 and 104 are all located relatively close to at least one exterior edge of each of the housings 101 and 102. In this example, the magnets 103 for the first housing 101 are oriented with a same pole (such as the north pole) facing towards the second housing 102. Conversely, the magnets 104 for the second housing 102 are oriented with a different pole (i.e., in this example, the south pole) facing towards the first housing 101.

So configured, the magnets 103 of the first housing 101 and the magnets 104 of the second housing 102 will mutually attract one another rather than repel one another and hence will serve to urge the first housing 101 and the second housing 102 into an aligned juxtaposition with respect to one another. (For the sake of clarity and illustration, in some cases these figures may present the housings 101 and 102 as being slightly separated from one another. In a physical embodiment, however, the two housings 101 and 102 likely abut one another at one or more points of contact.)

Though juxtaposed as described and in physical contact with one another, the first and second housing 101 and 102 are not pivotally connected to one another via a mechanical connector. Instead, and as will be described herein, these two housings 101 and 102 pivot with respect to one another via and about the aforementioned magnets 103 and 104 interacting with one another as a magnetic connector. That said, with sufficient applied force the attraction between these magnets 103 and 104 can be overcome to permit the first housing and the second housing 102 to be separated from one another. Appropriate uses of this characteristic are described herein as well.

FIG. 2 presents one approach in these regards where the first and second housings 101 and 102 both comprise substantially planar components. In this particular example the first housing 101 includes a keyboard and the second housing includes a display (which may, or may not, comprise a touch-sensitive screen as desired). In this example opposing side edges (i.e., the edges denoted by reference numerals 201 and 203 for the first housing 101 and the edges denoted by reference numerals 202 and 204 for the second housing 102) are configured as a pivot surface.

In particular, but without intending any particular limitations in these regards, these pivot surfaces comprise half bullnose edges. Accordingly, viewed in cross section, these pivot surfaces are one-half of a circle. (As used herein, the expression "pivot surface" will be understood to refer to a surface on a first body upon which a second body makes contact and over which the second body moves when the second body pivots with respect to the first body.)

The aforementioned magnets 103 and 104 are disposed within these housings 101 and 102 (respectively) in close proximity to the above-described edges 201-204. So configured, a first edge 201 of the first housing 101 will be urged towards a first edge 202 of the second housing 102 by virtue of the corresponding magnetic attraction. Notwithstanding that magnetic attraction, however, these two housings 101 and 102 can pivot with respect to one another. This pivoting capability, in turn, permits (for example) a user to "close" the apparatus 100 by pivoting the second housing 102 forward to lie atop the first housing 101.

As used herein the expression "pivot surface" will be further understood to not merely comprise an edge wholly consisting of a flat surface (oriented, for example, perpendicular to the housing itself). That said, however, it will also be understood that these teachings do not necessarily require that both housings (nor multiple edges for any given housing) having an edge configured as a pivot surface; instead, only one of the housings (and/or only one edge of the housings) need have an exterior edge configured as a pivot surface.

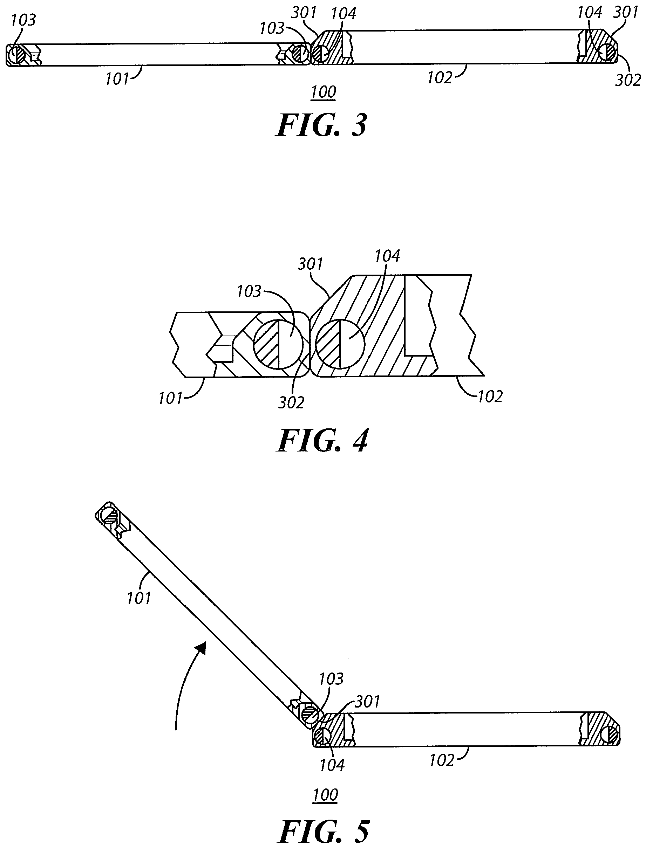

In the example provided above the pivot surface comprised the rounded surface of the described exterior edges 201-204. These teachings will readily accommodate other approaches in these regards. FIGS. 3 and 4 present one such example. In this example the second housing 102 has opposing exterior edges that include a first edge portion 302 that comprises a right-angle edge (relative to the top and bottom surfaces of the housing) and a second edge portion 301 that is disposed at about a forty-five degree angle with respect to the right-angle edge. Accordingly, these edge portions 301 and 302 comprise in combination a pivot surface about which the edges of the first housing 101 can move while pivoting.

In this illustrative example the embedded magnets 103 and 104 are shown with half of each magnet appearing with crosshatching. This crosshatching serves to generally denote the north pole of each magnet 103 and 104.

Also in this illustrative example (and referring perhaps in particular to FIG. 4) the magnets 103 for the first housing 101 are disposed centrally with respect to the edge, top, and bottom thereof (that is, essentially equidistant from each of the foregoing at the closest point). As a result, the magnetic fields for these magnets 103 are relatively equal on opposing sides of the first housing 101 at any given point.

Conversely, the magnets 104 for the second housing 102 are eccentric and offset in these regards. In particular, these magnets 104 are disposed closer to the bottom surface of the second housing 102 (in this view) than to the top surface thereof. Accordingly, the corresponding magnetic field will be somewhat weaker on the top surface of the second housing 102 than at a comparable opposing point on the bottom surface thereof.

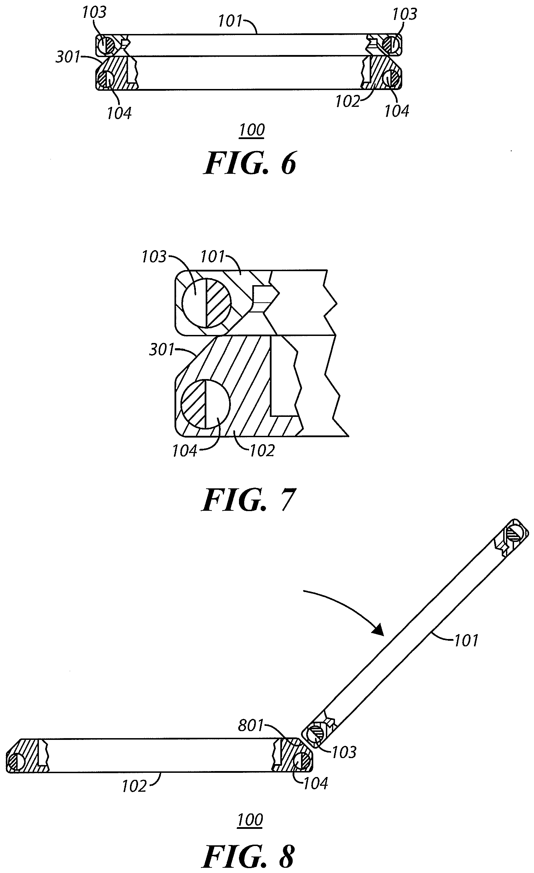

So configured, and as before, the magnets 103 and 104 will urge the two housings 101 and 102 towards one another while also permitting the two housings to be selectively and readily pivoted with respect to one another. FIG. 5 illustrates, for example, the first housing 101 pivoting upwardly and clockwise about the aforementioned pivot surface/magnetic connector. With reference to FIGS. 6 and 7, eventually the first housing 101 will come into contact with and essentially lie flush across and in alignment with the second housing 102.

In this particular configuration the keyboard and display are facing inwardly towards one another. It will also be noticed that the first housing 101 is held in this closed position with respect to the second housing 102 by pairs of magnets 103/104 on both opposing sides of the apparatus 100. Accordingly, the magnets 103 and 104 also serve, in this configuration, as a latching mechanism to hold the apparatus 100 in the illustrated closed state.

As shown perhaps best in FIG. 7, although the magnets 103 for the first housing 101 are now rotated 180 degrees from their original orientation shown in FIG. 3, these magnets 103 are now also rotationally translated by 90 degrees with respect to the magnets 104 of the second housing 102. Accordingly, these magnets 103 and 104 are disposed such that the north poles of one are relatively closer to the south poles of the other, hence preserving the efficacy of the corresponding magnetic attraction.

In this particular illustrative example, however, the magnets 103 and 104 are positioned further apart from one another than as shown in FIG. 3 due to the offset positioning of the magnets 104 in the second housing 102. For all the foregoing reasons, then, the strength of the magnetic force between respective pairs of magnets 103 and104 will be less than for the same magnet pairs shown in FIG. 3. Accordingly, the magnetic bond is more easily broken and hence it can be relatively simple for the user to "unlatch" the one housing from the other when manipulating the apparatus 100 to open it.

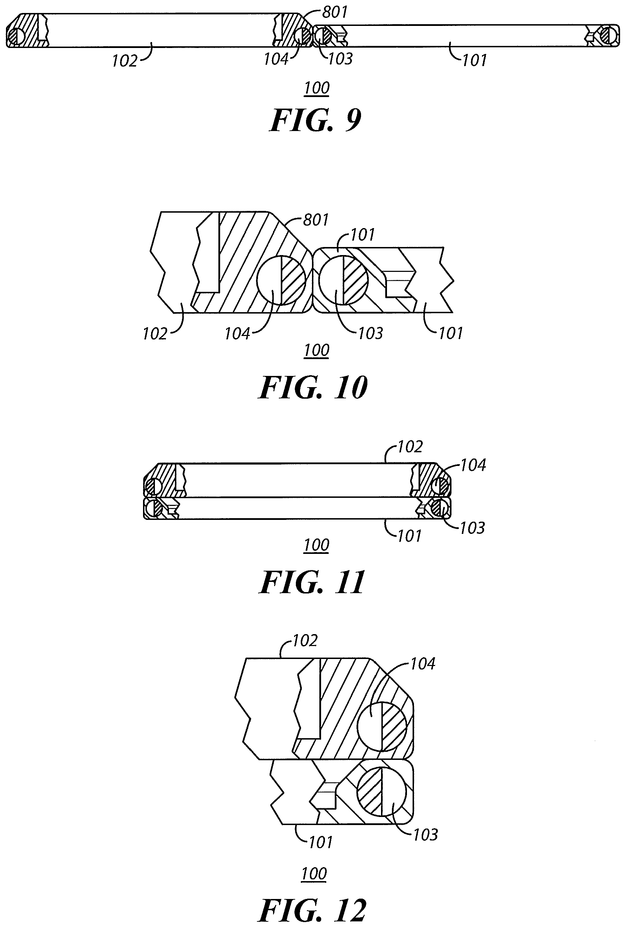

FIG. 8 illustrates that that upon breaking that magnetic latch the first housing 101 can continue to pivot in the clockwise direction by now pivoting about the second edge portion 801 on the external edge that is opposite the previously-described second edge portion 301. As shown in FIGS. 9 and 10 this rotation can continue until the first housing 101 is again coplanar with the second housing 102. It will be noted that although the first housing 101 is now on the opposite side of the second housing 102, both the display and the keyboard are again facing upwardly. Such a transformation can be convenient to a given user in a particular application setting for any of a variety of reasons.

As mentioned above, by breaking the magnetic bond between the first housing 101 and the second housing 102 at any point the two housings 101 and 102 can be physically separated from one another. This configuration, in turn, offers additional opportunities regarding how these two components can be juxtaposed with respect for one another. As one example in these regards, by disconnecting the first housing 101 from the second housing 102 the first housing 101 can be disposed, face up, on the underside of the second housing as shown in FIGS. 11 and 12. So configured, the keyboard is now stowed between the two housings 101 and 102 and is protected both from damage and false-triggering events. Such a configuration may be useful, for example, when looking to employ the apparatus 100 as a touch-sensitive tablet having a relatively small footprint.

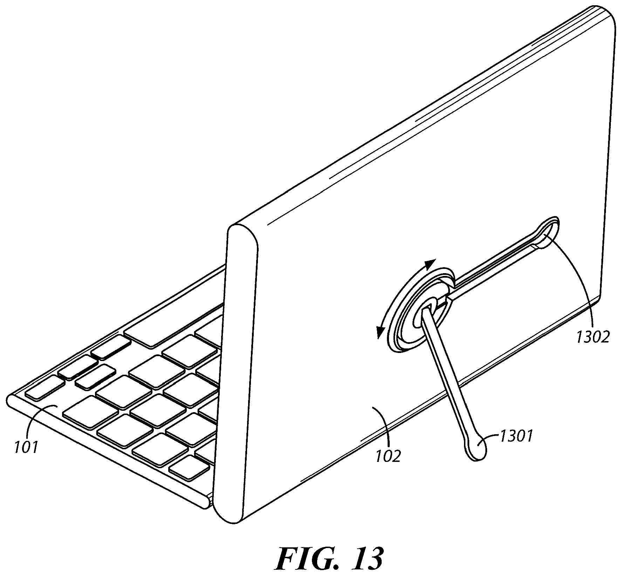

The strength, number, and specific positioning of the magnets 103 and 104 will influence or even determine in some cases whether either housing 101 and 102 can be maintained at a particular angle with respect to the other. If desired, one or both housings 101 and 102 can also include a stand to aid in maintaining the corresponding housing at a desired position/angle. FIG. 13 presents one illustrative example in these regards. In this example the second housing 102 includes a kickstand-like stand 1301 that can be selectively removed from a corresponding nesting cavity 1302 and then rotated and/or angled outwardly by hand to a desired position. Those skilled in the art will recognize that there are numerous possibilities in these regards and that no particular limitations are intended by way of the specifics of this example.

So configured, a multi-housing apparatus can have one or more of its housings be selectively pivotally movable about another housing with respect to one or more pivot surfaces notwithstanding the lack of any mechanical connectors or the like. The absence of mechanical connectors, in turn, provides a simplified (and more aesthetically pleasing) exterior profile for the apparatus. Avoiding mechanical connectors can also help to ruggedize the apparatus and render the apparatus less susceptible to damage from undue impact with other surfaces and objects. A lack of mechanical connectors also makes it easier to configure the various housings of the apparatus in ways that require momentary physical separation between the housings. Those skilled in the art will also appreciate that these teachings greatly support and facilitate a modular approach to housing designs as well as facilitating the interchangeability of housings if desired.

In many cases one or more components of the first housing 101 will need to communicate with one or more components of the second housing 102. To avoid the use of physical communication pathways (such as electrically-conductive or optically-transmissive wires/fibers) the apparatus 100 can include one or more wireless data paths to communicatively couple the two housings 101 and 102. Examples include free-space optical links and any of a variety of radio-frequency-based methodologies (including but not limited to: Bluetooth® compatible transmissions protocols, a near-field transmission approach of choice, and so forth).

The presence of magnets in these housings can also be leveraged in other ways if desired. For example, the making or breaking of a given magnetic connection can be sensed and can serve to trigger a corresponding action. As one illustrative example in these regards, a particular predetermined application can launch as an automatic response in these regards. As another example, these magnets can serve, at least in part, to help the two housings automatically self-align their sides with one another such that the left sides of both housings are at least substantially co-linear and co-terminal with one another, as are the right sides of both housings.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a first housing (101);
a second housing (102) having a first exterior edge (202) configured as a pivot surface, and a second exterior edge (204) formed on a side of the second housing that is opposite the first exterior edge, the second exterior edge also being configured as a pivot surface, the second housing not being pivotally connected to the first housing via a mechanical connector;
at least a first magnet (103) disposed within the first housing; and
at least a second magnet (104) disposed within the second housing proximal the first exterior edge;
at least a third magnet (103) disposed within the first housing;
at least a fourth magnet (104) disposed within the second housing proximal the second exterior edge;
wherein the first magnet and the second magnet interact with one another as a magnetic connector such that the first housing pivots with respect to the second housing; and
wherein the third magnet and the fourth magnet interact with one another as a magnetic connector when the first housing pivots with respect to the second housing about the pivot surface provided by the second exterior edge.

2. The apparatus of claim 1 wherein the first housing and the second housing both comprise substantially planar components.

3. The apparatus of claim 1 wherein the first housing includes a keyboard.

4. The apparatus of claim 4 wherein the keyboard comprises an alphanumeric keyboard.

5. The apparatus of claim 1 wherein the first exterior edge comprises a half bullnose edge.

6. The apparatus of claim 1 wherein the first exterior edge has a first edge portion (301) that comprises a right-angle edge and a second edge portion (302) that is disposed at about a forty-five degree angle to the right-angle edge.

7. The apparatus of any preceding claim, wherein:
the at least a first magnet comprises a first plurality of magnets (103) disposed along a first exterior edge (201)of the first housing;
the at least a second magnet comprises a second plurality of magnets (104) disposed along the first exterior edge of the second housing.

8. The apparatus of claim 7 wherein the first exterior edge of the first housing is also configured as a pivot surface.

9. The apparatus of claim 7, wherein:
the at least a third magnet comprises a third plurality of magnets (103) disposed along a second exterior edge (203) of the first housing, the second exterior edge of the first housing being opposite the first exterior edge of the first housing.

10. The apparatus of claim 9 wherein the second exterior edge of the second housing is also configured as a pivot surface.

11. The apparatus of claim 10, wherein:
the at least a fourth magnet comprises a fourth plurality of magnets (104) disposed along the second exterior edge of the second housing.

12. The apparatus of claim 11 wherein:
the second exterior edge of the first housing is also configured as a pivot surface; and
the third plurality of magnets and the fourth plurality of magnets interacting with one another as a magnetic connector such that the first housing pivots with respect to the second housing about the second exterior edge of the second housing.

13. The apparatus of claim 7 wherein the first housing comprises a first substantially-planar housing and the second housing comprises a second substantially-planar housing.

## Patentansprüche

1. Eine Vorrichtung, die aufweist:
ein erstes Gehäuse (101);
ein zweites Gehäuse (102) mit zumindest einer ersten Außenkante (202),
die als eine Schwenkfläche konfiguriert ist, und einer zweiten Außenkante (204), die an einer Seite des zweiten Gehäuses ausgebildet ist, die gegenüber der ersten Außenkante ist, wobei die zweite Außenkante ebenfalls als eine Schwenkfläche konfiguriert ist, wobei das zweite Gehäuse mit dem ersten Gehäuse nicht schwenkbar verbunden ist über einen mechanischen Verbinder;
zumindest einen ersten Magnet (103), der in dem ersten Gehäuse ange-ordnet ist; und
zumindest einen zweiten Magnet (104), der in dem zweiten Gehäuse proximal zu der ersten Außenkante angeordnet ist;
zumindest einen dritten Magnet (103), der in dem ersten Gehäuse ange-ordnet ist;
zumindest einen vierten Magnet (104), der in dem zweiten Gehäuse proximal zu der zweiten Außenkante angeordnet ist;
wobei der erste Magnet und der zweite Magnet als ein magnetischer Verbinder zusammenwirken derart, dass das erste Gehäuse in Bezug auf das zweite Gehäuse schwenkt; und
wobei der dritte Magnet und der vierte Magnet als ein magnetischer Verbinder zusammenwirken, wenn das erste Gehäuse in Bezug auf das zweite Gehäuse um die Schwenkfläche schwenkt, die von der zweiten Außenkante vorgesehen wird.

2. Die Vorrichtung gemäß Anspruch 1, wobei das erste Gehäuse und das zweite Gehäuse im Wesentlichen planare Komponenten aufweisen.

3. Die Vorrichtung gemäß Anspruch 1, wobei das erste Gehäuse eine Tastatur umfasst.

4. Die Vorrichtung gemäß Anspruch 4, wobei die Tastatur eine alphanumerische Tastatur aufweist.

5. Die Vorrichtung gemäß Anspruch 1, wobei die erste Außenkante eine halbrunde Kante aufweist.

6. Die Vorrichtung gemäß Anspruch 1, wobei die erste Außenkante einen ersten Kantenabschnitt (301) hat, der eine rechtwinklige Kante aufweist, und einen zweiten Kantenabschnitt (302), der in einem Winkel von ungefähr fünfundvierzig Grad zu der rechtwinkligen Kante angeordnet ist.

7. Die Vorrichtung gemäß einem vorhergehenden Anspruch, wobei:
der zumindest eine erste Magnet eine erste Vielzahl von Magneten (103) angeordnet entlang einer ersten Außenkante (201) des ersten Gehäuses aufweist;
der zumindest eine zweite Magnet eine zweite Vielzahl von Magneten (104) angeordnet entlang der ersten Außenkante des zweiten Gehäuses aufweist.

8. Die Vorrichtung gemäß Anspruch 7, wobei die erste Außenkante des ersten Gehäuses auch als eine Schwenkfläche konfiguriert ist.

9. Die Vorrichtung gemäß Anspruch 7, wobei:
der zumindest eine dritte Magnet eine dritte Vielzahl von Magneten (103) angeordnet entlang einer zweiten Außenkante (203) des ersten Gehäuses aufweist, wobei die zweite Außenkante des ersten Gehäuses gegenüber der ersten Außenkante des ersten Gehäuses ist.

10. Die Vorrichtung gemäß Anspruch 9, wobei die zweite Außenkante des zweiten Gehäuses auch als eine Schwenkfläche konfiguriert ist.

11. Die Vorrichtung gemäß Anspruch 10, wobei:
der zumindest eine vierte Magnet eine vierte Vielzahl von Magneten (104) angeordnet entlang der zweiten Außenkante des zweiten Gehäuses aufweist.

12. Die Vorrichtung gemäß Anspruch 11, wobei:
die zweite Außenkante des ersten Gehäuses auch als eine Schwenkfläche konfiguriert ist; und
die dritte Vielzahl von Magneten und die vierte Vielzahl von Magneten als ein magnetischer Verbinder zusammenwirken derart, dass das erste Gehäuse in Bezug auf das zweite Gehäuse um die zweite Außenkante des zweiten Gehäuses schwenkt.

13. Die Vorrichtung gemäß Anspruch 7, wobei das erste Gehäuse ein erstes im Wesentlichen planares Gehäuse aufweist und das zweite Gehäuse ein zweites im Wesentlichen planares Gehäuse aufweist.

## Revendications

1. Appareil comprenant :
un premier boîtier (101) ;
un second boîtier (102) ayant un premier bord extérieur (202) configuré comme une surface de pivot, et un second bord extérieur (204) formé sur un côté du second boîtier qui est opposé au premier bord extérieur, le second bord extérieur étant également configuré comme une surface de pivot, le second boîtier n'étant pas raccordé de manière pivotante au premier boîtier via un connecteur mécanique ;
au moins un premier aimant (103) disposé à l'intérieur du premier boîtier ; et
au moins un deuxième aimant (104) disposé à l'intérieur du second boîtier à proximité du premier bord extérieur ;
au moins un troisième aimant (103) disposé à l'intérieur du premier boîtier ;
au moins un quatrième aimant (104) disposé à l'intérieur du second boîtier à proximité du second bord extérieur ;
dans lequel le premier aimant et le deuxième aimant interagissent entre eux en tant que connecteur magnétique de sorte que le premier boîtier pivote par rapport au second boîtier ; et
dans lequel le troisième aimant et le quatrième aimant interagissent entre eux en tant que connecteur magnétique lorsque le premier boîtier pivote par rapport au second boîtier autour de la surface de pivot fournie par le second bord extérieur.

2. Appareil selon la revendication 1, dans lequel le premier boîtier et le second boîtier comprennent tous deux des composants sensiblement planaires.

3. Appareil selon la revendication 1, dans lequel le premier boîtier comprend un clavier.

4. Appareil selon la revendication 4, dans lequel le clavier comprend un clavier alphanumérique.

5. Appareil selon la revendication 1, dans lequel le premier bord extérieur comprend un demi-chant en quart de cercle.

6. Appareil selon la revendication 1, dans lequel le premier bord extérieur a une première partie de bord (301) qui comprend un bord en angle droit et une seconde partie de bord (302) qui est disposée à un angle d'environ quarante-cinq degrés par rapport au bord en angle droit.

7. Appareil selon l'une quelconque des revendications précédentes, dans lequel :
le au moins un premier aimant comprend une première pluralité d'aimants (103) disposés le long d'un premier bord extérieur (201) du premier boîtier ;
le au moins un deuxième aimant comprend une deuxième pluralité d'aimants (104) disposés le long du premier bord extérieur du second boîtier.

8. Appareil selon la revendication 7, dans lequel le premier bord extérieur du premier boîtier est également configuré comme une surface de pivot.

9. Appareil selon la revendication 7, dans lequel :
le au moins un troisième aimant comprend une troisième pluralité d'aimants (103) disposés le long d'un second bord extérieur (203) du premier boîtier, le second bord extérieur du premier boîtier étant opposé au premier bord extérieur du premier boîtier.

10. Appareil selon la revendication 9, dans lequel le second bord extérieur du second boîtier est également configuré comme une surface de pivot.

11. Appareil selon la revendication 10, dans lequel :
le au moins un quatrième aimant comprend une quatrième pluralité d'aimants (104) disposés le long du second bord extérieur du second boîtier.

12. Appareil selon la revendication 11, dans lequel :
le second bord extérieur du premier boîtier est également configuré comme une surface de pivot ; et
la troisième pluralité d'aimants et la quatrième pluralité d'aimants interagissant entre elles en tant que connecteur magnétique de sorte que le premier boîtier pivote par rapport au second boîtier autour du second bord extérieur du second boîtier.

13. Appareil selon la revendication 7, dans lequel le premier boîtier comprend un premier boîtier sensiblement planaire et le second boîtier comprend un second boîtier sensiblement planaire.
